# EUROPEAN PATENT SPECIFICATION

(11) **EP 1 195 789 B1**
(45) Date of publication and mention of the grant of the patent: **02.05.2007**
(21) Application number: 00203449.4
(22) Date of filing: 06.10.2000
(51) Int. Cl.: H01H 57/00, H01L 41/09

(54) **An improved low voltage contactor**
Verbesserter Niederspannungsschütz
Contacteur basse tension amelioré

(43) Date of publication of application: 10.04.2002
(73) Proprietor: ABB RESEARCH LTD., 8050 Zürich (CH)
(72) Inventor: Mandurino, Pietro, 40141 Bologna (IT); Cassarà, Salvatore, 22100 Como (IT); Azzola, Lucio, 24100 Bergamo (IT)
(74) Representative: Giavarini, Francesco

(56) References cited:
- DE-A- 3 909 261
- JP-A- 2000 208 826
- US-A- 4 654 555
- US-A- 4 789 836
- US-A- 5 170 088

## Description

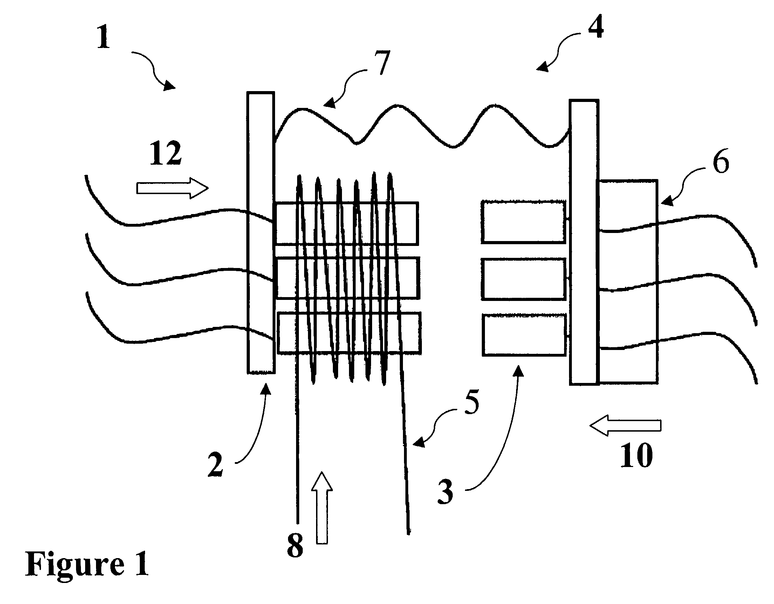

The present invention relates to an improved low voltage contactor. Particularly, the present invention related to an improved low voltage contactor, which is used for low voltage power distribution applications (i.e. for voltage values lower than 1 KV). The use of low voltage contactors is widely known in the state of the art. This kind of devices is generally used when it is necessary to interrupt the nominal current in a low voltage power distribution line. Referring to figure 1, it is schematically illustrated the functioning principle for a known three-pole low voltage contactor. A low voltage contactor (reference 1) generally comprises fixed contacts 2 and movable contacts 3. As illustrated in figure 1, the low voltage contactor 1 may be of the three-pole kind, which means that it adopts three electric poles, each comprising a fixed contact 2 and a movable contact 3. Also contactors of the four-pole kind are widely used in the state of the art. The movable contacts 3 are coupled/decoupled with the fixed contacts 2 during the closing/opening operation of the low voltage contactor 1. The low voltage contactor 1 comprises generally actuating means (globally indicated by the reference 4), which are used for coupling/decoupling the movable contacts 3 and the fixed contacts 2. The actuating means 4 comprise an electromagnetic arrangement including a coil 5 wounded on the fixed contacts 2 and a metal element 6, mechanically coupled with the movable contacts 3. Further, the actuating means 4 comprise also a spring element 7 mechanically coupled between the fixed contacts 2 and the movable contacts 3. During the closing operation of the low voltage contactor 1, an auxiliary current 8 is injected in the coil 5, so as to generate a magnetic field. The lines of this magnetic field concentrate into the metal element 6, which is therefore subjected to an attractive magnetic force 10. So, the movable contacts 3 can be coupled with the fixed contacts 2 and the phase current 12 is allowed to flow. It should be noticed that, in the same time, the spring element 7 is compressed and a certain amount of elastic energy is stored therein. During the opening operation of the low voltage contactor 1, the auxiliary current 8 is no more injected into the coil 5, so as to make null the attractive magnetic force 10. The movable elements 3 are therefore subjected only to the elastic reaction force of the spring element 7. By means of releasing the elastic energy stored during the closing operation, the decoupling of the movable contacts 3 from the fixed contacts 2 is obtained. So, the phase current 12 is no more allowed to flow. The low voltage contactors of the state of the art are characterised by some drawbacks. In fact, the coil 5 has to be subjected to difficult and complicated sizing operations, in order to ensure satisfactory levels of performance and reliability. Another drawback consists in the fact that the auxiliary current 8, which is to be supplied to the coil 5, has to reach relatively high values, in order to reach satisfactory closing operation times. Further, the auxiliary current 8 has to be supplied continuously, in order to ensure the coupling of the fixed and of the movable contacts and, therefore, the closing state of the low voltage contactor. These facts can often bring to a relatively high power consumption of the low voltage contactor. Moreover, the overall dimensions of the metal element 6 are relatively high and cannot be easily reduced. Obviously, this fact makes the fabrication and installation costs of the low voltage contactor relatively high.

An example of traditional low voltage contactor for low voltage applications is illustrated in the patent application US 5170088.

Therefore, the main object of the present invention is to provide a low voltage contactor for low voltage power distribution applications, which allows overcoming the drawbacks described above.

Within this scope, another object of the present invention is to provide a low voltage contactor, which has a structure remarkably simplified.

Another object of the present invention is to provide a low voltage contactor, which allows coupling/decoupling the movable contacts with the fixed contacts of the low voltage contactor with a negligible level of power consumption.

Another object of the present invention is to provide a low voltage contactor, which allows maintaining coupled the electrical contacts with a negligible level of power consumption.

Another object of the present invention is to provide a low voltage contactor, which is easy to control and which allows achieving relatively high levels of reliability.

Another object of the present invention is to provide a low voltage contactor, which is characterised by a lower overall size and reduced fabrication and installation costs.

This scope and these and other objects that will become apparent hereinafter are achieved by a low voltage contactor for low voltage power distribution applications according to what defined in claim 1 and in depending claims.

Further characteristics and advantages of the low voltage contactor, according to the present invention, will be better described hereinafter, with particular reference to the enclosed figures, in which:
figure 1 represents schematically a low voltage contactor of the known type;
figure 2 illustrates a block diagram representing schematically the basic structure of the low voltage contactor, according to the present invention;
figure 3 illustrates schematically a preferred embodiment of the low voltage contactor, according to the present invention;
figure 4 illustrates schematically another preferred embodiment of the low voltage contactor, according to the present invention;
figure 5 illustrates schematically another preferred embodiment of the low voltage contactor, according to the present invention;
figure 6 illustrates schematically another preferred embodiment of the low voltage contactor, according to the present invention.

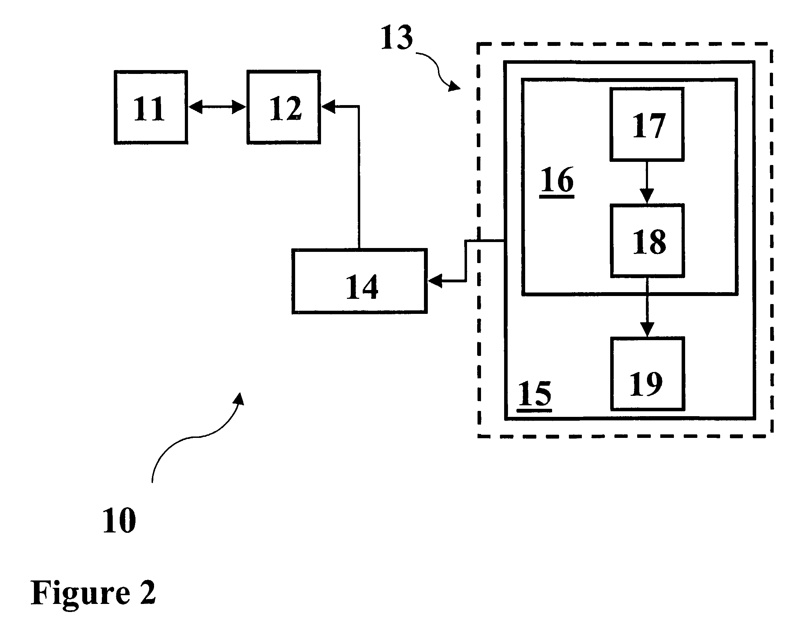

Referring now to figure 2, the reference 10 indicates a block diagram illustrating the basic structure of a low voltage contactor for low voltage power distribution applications, according to the present invention.

The low voltage contactor 10 comprises at least a fixed contact 11 and a movable contact 12. The movable contact 12 is coupled/decoupled with the fixed contact 11 during the closing/opening operation of the low voltage contactor 10. The low voltage contactor 10 comprises further motion generating means 13, operatively connected to the movable contact 12 by means of motion transmission means 14. The motion generating means 13 comprises at least a piezoelectric motor assembly 15, operatively connected to the motion transmission means 14, so as to couple/decouple the movable contact 12 with the fixed contact 11 during the closing/opening operation of the low voltage contactor 10. The piezoelectric motor assembly 15, comprises advantageously a stator arrangement 16 comprising at least a piezoelectric assembly 17 operatively connected to a stator frame 18. The piezoelectric motor assembly 15 comprises further a rotor arrangement 19, operatively connected the stator frame 18. The low voltage contactor, according to the present invention, can comprise one or more electric poles, each one comprising at least a movable contact 12 and a fixed contact 11. Particularly, the low voltage contactor, according to the present invention, can be of the three-pole kind or of the four-pole kind.

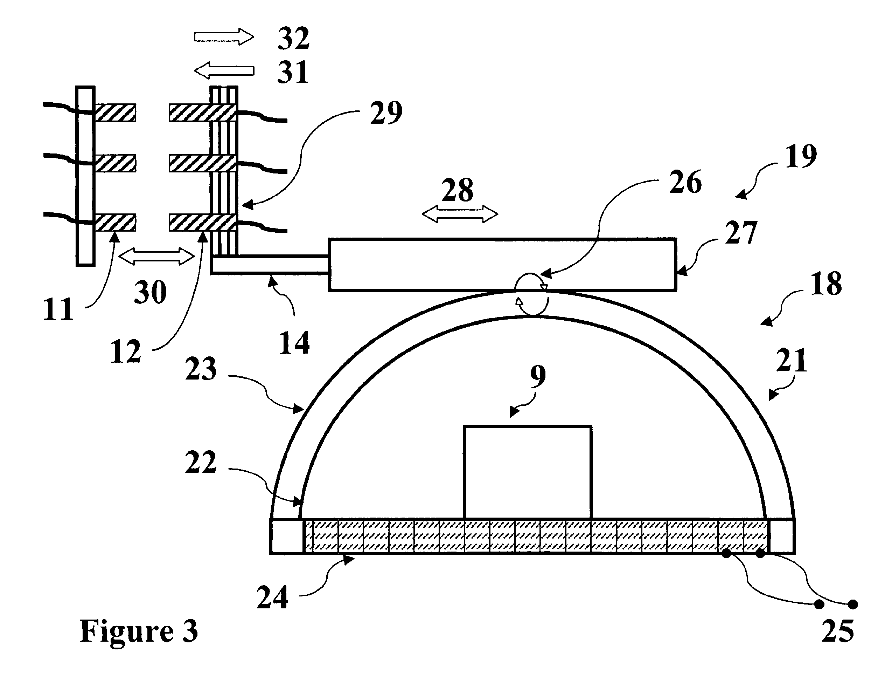

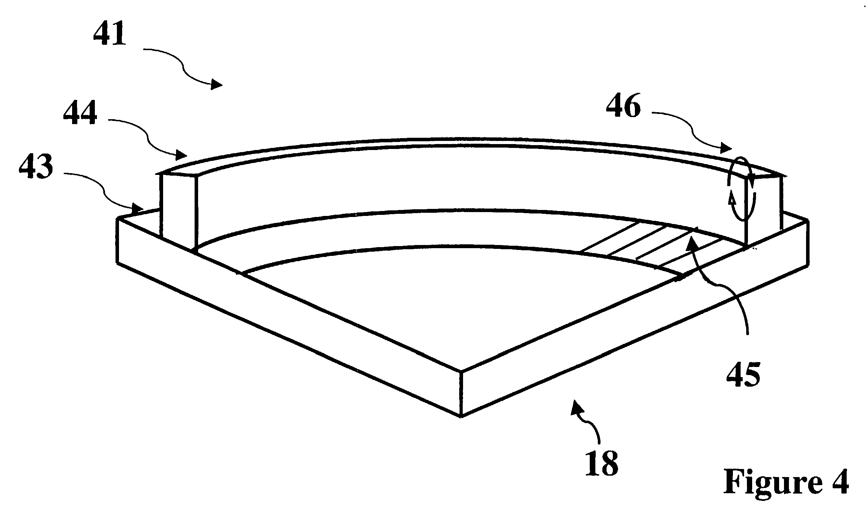

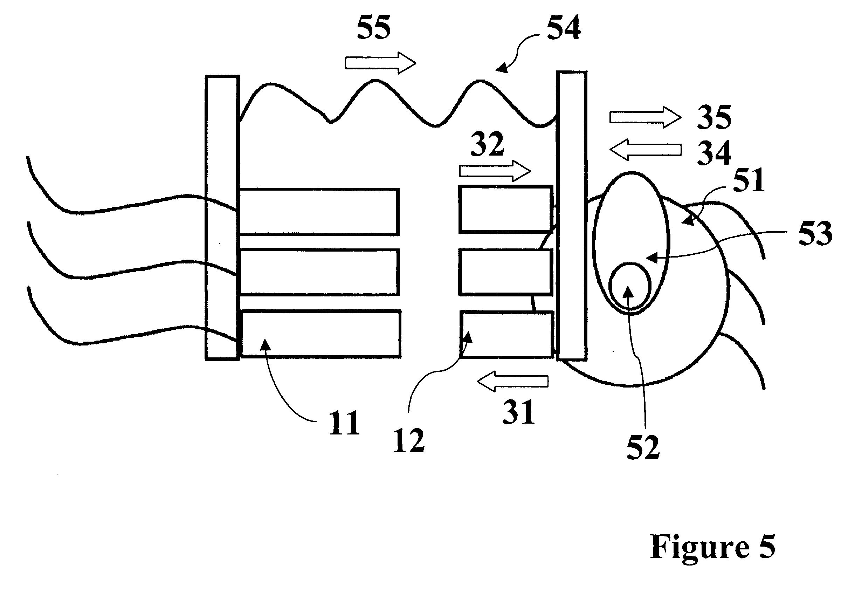

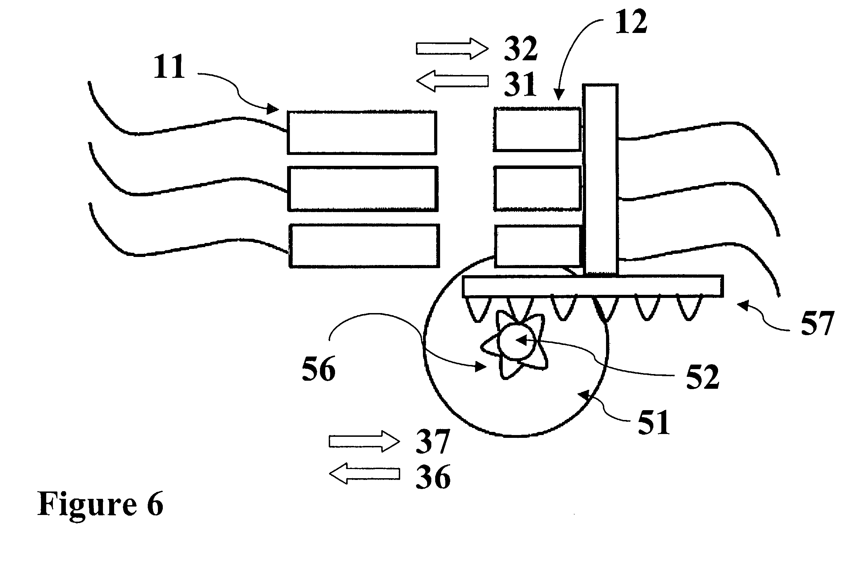

Referring to figure 3, accordingly to a preferred embodiment of the low voltage contactor 10, the stator frame 18 of the stator arrangement 16 comprises a movable cap-shaped element 21 (partially shown in figure 3) provided with an internal surface 22 and an external surface 23. Accordingly to this preferred embodiment, the piezoelectric assembly 17 comprises a plurality of piezoelectric elements 24, which are mechanically coupled to the internal surface 22. The piezoelectric elements 24 are advantageously excited by predefined excitation signals 25, so as to determine an elliptical motion 26 of the external surface 23 of the cap-shaped element 21. Advantageously, two different portions (not shown) of the piezoelectric elements 24 may be fed with excitation signals 25 that comprise two different ultrasonic excitation signals that are shifted of 90°. The piezoelectric elements vibrate with a 90° phase-shift. This vibration is transmitted to the cap-shaped element 21. For the aim of improving the transmission of vibrations a balancing mass 9 can be used. This fact brings to the generation of two 90°-shifted "travelling waves" (not shown) on the external surface 23 of the cap-shaped element 21. In this manner, each point of the external surface 23 is subjected to an elliptical motion 26. Preferably, the rotor arrangement 19 comprises a rotor rod 27, which is mechanically coupled to the external surface 23 of the movable cap-shaped element 21, so as to be subjected to a motion 28 of the linear kind. Advantageously, the motion transmission means 14 comprises a motion transmission element 29 operatively connected to the rotor rod 27 and to the movable contact 12. In this manner, a motion 30 can be transmitted to the movable contact 12, which can be coupled/decoupled with the fixed contact 11. Therefore, during the closing operation of the low voltage contactor 10, the movable contact 12 can be moved along a direction 31, so as to couple it with the fixed contact 11. It should be noticed that the movable contact 12 can be kept in this position in a "passive" manner, with a substantially null consumption of electric power. In fact, in order to keep the movable contact 12 in position, it is enough to interrupt the supply of the predefined excitation signals 25 to the piezoelectric elements 24. In this case, the piezoelectric elements 24 stop vibrating and no more travelling waves are generated on the external surface 23. Because the rotor rod 27 is mechanically coupled to the external surface 23, contact friction forces prevent the rotor rod 27 from moving with respect to the external surface 23. Therefore, the movable contact 12 is not allowed to move anymore. During the opening operation of the low voltage contactor 10, the piezoelectric elements 24 can be excited in a manner, which allows moving the movable contact 12 along a direction 32, so as to decouple it from the fixed contact 11. This can be simply obtained by means of the inversion of the phase delay of the predefined excitation signals. Referring now to figure 4, according to another preferred embodiment of the low voltage contactor 10, the stator frame 18 of the stator arrangement 16 comprises a flange element 41. The flange element 41 is provided with a base wall 43 and a projecting wall 42, which protrudes from the base wall 43 in a substantially vertical manner. As illustrated in figure 4 (where only a portion 44 of the flange element 41 is shown), the piezoelectric assembly 17 comprises a plurality of piezoelectric elements 45. The piezoelectric elements 45 are mechanically coupled to the base wall 43. Advantageously, the piezoelectric elements 45 may be excited by predefined excitation signals (not shown), so as to determine an elliptical motion 46 of the projecting wall 42. According to this embodiment of the present invention, the rotor arrangement 19 comprises a rotor disc 51 (not shown in figure 4 but illustrated in figures 5 and 6). The rotor disc 51 is mechanically coupled to the projecting wall 42, so as to be subjected to a motion of the rotational kind.

The fact that the rotor disc 51 is able to transmit a motion of the rotational kind allows implementing various embodiments of the low voltage contactor, according to the present invention. According to a preferred embodiment, illustrated in figure 5, the motion transmission means 14 comprises a shaft 52 mechanically connected to the rotor disc 51. A cam 53 is mechanically fixed to the shaft 52. The cam 53 can mechanically co-operate with the movable contact 12, so as to transmit a motion to the movable contact 12. According to this embodiment of the low voltage contactor, according to the present invention, spring means 54 are mechanically connected between the movable contact 12 and the fixed contact 11. The spring means 54 are positioned in a manner, which allows them to be compressed during the closing operation of the low voltage contactor 10. During the closing operation of the low voltage contactor 10, the cam 53 rotates in direction of the arrow 34. In this manner, the movable contact 12 is pushed towards (arrow 31) the fixed contact 11, so as to be coupled with it. During the movement of the movable contact 12, the spring element 54 is compressed and a certain amount of elastic energy is stored therein. It should be noticed that the movable contact 12 can be kept in this position in a "passive" manner, with a substantially null consumption of electric power. In fact, the cam 53 can be kept fixed by means of the contact friction forces between the rotor disc 51 and the ring-shaped element 41, once the piezoelectric elements 45 are no more supplied with the predefined excitation signals. During the opening operation of the low voltage contactor 10, the piezoelectric elements 45 can be excited in a manner, which allows moving the cam 53 in the direction of the arrow 35. The movable contact 12 is thus disengaged from the cam 53. The spring element 54 is free to realise the stored elastic energy by applying a spring reaction 55, which pushes the movable contact 12 away from the fixed contact 11, in direction of the arrow 32.

According to another embodiment of the present invention, the motion transmission means 14 may comprise a shaft 52 mechanically connected to the rotor disc 51. A pinion 56 is mechanically fixed to the shaft 52. The pinion 56 mechanically co-operates with a rack 57, which is mechanically connected to the movable contact 12, so as to transmit a motion to the movable contact 12. During the closing operation of the low voltage contactor 10, the pinion 56 rotates in direction of the arrow 36. In this manner, the movable contact 12 is pushed towards (arrow 31) the fixed contact 11, so as to be coupled with it. It should be noticed that, also in this case, the movable contact 12 can be kept in this position in a "passive" manner, with a substantially null consumption of electric power. In fact, the pinion 56 can be kept fixed by means of the contact friction forces that arise between the rotor disc 51 and the ring-shaped element 41, once the piezoelectric elements 45 are no more supplied with excitation signals. During the opening operation of the low voltage contactor 10, the piezoelectric elements 45 can be excited in a manner, which allows moving the pinion 56 in the direction of the arrow 37. The movable contact 12 is thus pushed away from the fixed contact 11, in direction of the arrow 32.

The low voltage contactor, according to the present invention, allows achieving the intended aims and objects.

In fact, the adoption of the piezoelectric motor assembly 17 for moving the movable contact 12 allows avoiding the use of electromagnetic arrangements that need the injection of auxiliary currents. The generation of motion by the piezoelectric motor assembly is mainly, as illustrated in the illustrated preferred embodiments, of the "mechanical" kind. This property allows achieving considerable advantages such as the need of negligible levels of electric power consumption for moving the movable contact 12 and, above all, for keeping the movable contact engaged in the "closing" position.

Further, it has been proven, in practice, that the piezoelectric motor assembly 17 allows achieving high torque levels at low speed and relatively reduced response times. Moreover, due the absence of electromagnetic arrangements that require the adoption of winding structures, the low voltage contactor according to the present invention has proven to be characterised by remarkably lower weight and size.

These facts, in conjunction with the fact that a remarkable reduction of the operating elements, needed for performing the operations required to the low voltage contactor, can be achieved, allows achieving relatively low fabrication and installation costs.

## Claims

1. A low voltage contactor (10) for low voltage power distribution applications comprising at least a fixed contact (11) and a movable contact (12), said movable contact being coupled/decoupled with said fixed contact (11) during the closing/opening operation of said low voltage contactor (10), comprising motion generating means (13), operatively connected to said movable contact (12) by means of motion transmission means (14), said motion generating means (13) comprising at least a piezoelectric motor assembly (15), operatively connected to said motion transmission means (14), so as to couple/decouple said movable contact (12) with said fixed contact (11) during the closing/opening operation of said low voltage contactor (10), said piezoelectric motor assembly (15), comprising:
- a stator arrangement (16) comprising at least a piezoelectric assembly (17) operatively connected to a stator frame (18); and
- a rotor arrangement (19), operatively connected to said stator frame (18),
**characterised by** the fact that:
- said stator frame (18) comprises a movable cap-shaped element (21) provided with an internal surface (22) and an external surface (23); and
- said piezoelectric assembly (17) comprises a plurality of piezoelectric elements (24) mechanically coupled to the internal surface (22) of said movable cap-shaped element (21), said piezoelectric elements (24) being excited by predefined excitation signals (25), so as to determine an elliptical motion (26) of the points of the external surface (23) of said cap-shaped element (21).

2. A low voltage contactor (10), according to claims 1, **characterised in that** said rotor arrangement (19) comprises a rotor rod (27), said rotor rod (27) being mechanically coupled to the external surface (23) of said movable cap-shaped element (21), so as to be subjected to a motion (28) of the linear kind.

3. A low voltage contactor (10), according to claim 1 or 2, **characterised in that** said stator frame (18) comprises a flange element (41) provided with a base wall (43) and a projecting wall (42), said projecting wall (42) protruding in a substantially vertical manner from said base wall (43).

4. A low voltage contactor (10), according to claim 3, **characterised in that** said piezoelectric assembly (17) comprises a plurality of piezoelectric elements (45) mechanically coupled to said base wall (43), said piezoelectric elements (45) being excited by predefined excitation signals, so as to determine an elliptical motion (46) of said projecting wall (42).

5. A low voltage contactor (10), according to claim 4, **characterised in that** said rotor arrangement (19) comprises a rotor disc (51), said rotor disc (51) being mechanically coupled said projecting wall (42), so as to be subjected to a motion of the rotational kind.

6. A low voltage contactor (10), according to claim 4, **characterised in that** said motion transmission means (14) comprise a motion transmission element (29) operatively connected to said rotor rod (27) and to said movable contact (12), so as to transmit a motion to said movable contact (12).

7. A low voltage contactor (10), according to claim 5, **characterised in that** said motion transmission means (14) comprises:
- a shaft (52) mechanically connected to said rotor disc (51);
- a cam (53) mechanically fixed to said shaft (52), said cam (53) mechanically co-operating with said movable contact (12), so as to transmit a motion to said movable contact (12).

8. A low voltage contactor (10), according to claim 7, **characterised in that** it comprises spring means (54) mechanically connected between said movable (12) and said fixed contact (11), said spring means (54) being positioned so as to be compressed during the closing operation of said low voltage contactor (10).

9. A low voltage contactor (10), according claim 5, **characterised in that** said motion transmission means (14) comprises:
- a shaft (52) mechanically connected to said rotor disc (51);
- a pinion (56) mechanically fixed to said shaft (52), said pinion (56) mechanically co-operating with a rack (57), said rack (57) being connected to said movable contact (12), so as to transmit a motion to said movable contact (12).

10. A low voltage contactor (10), according to one or more of the previous claims, **characterised in that** it comprises one or more electric poles, each of said electric poles comprising at least a fixed contact (11) and a movable contact (12).

11. A low voltage contactor (10), according to claim 10, **characterised in that** it is of the three-pole kind.

12. A low voltage contactor (10), according to claim 10, **characterised in that** it is of the four-pole kind.

## Patentansprüche

1. Niederspannungsschütz (10) für Anwendungen der Niederspannungs-Leistungsverteilung, mit mindestens einem feststehendem Kontakt (11) und einem beweglichen Kontakt (12), wobei der bewegliche Kontakt relativ zu dem feststehenden Kontakt (11) während des Schließungs- bzw. Öffnungsvorganges des Niederspannungsschütz (10) gekuppelt bzw. entkuppelt wird, mit einer Bewegungserzeugungseinrichtung (13), welche wirkungsmäßig mit dem beweglichen Kontakt (12) über eine Bewegungsübertragungseinrichtung (14) verbunden ist, wobei die Bewegungserzeugungseinrichtung (13) mindestens eine piezoelektrische Antriebsanordnung (15) enthält, welche wirkungsmäßig mit der Bewegungsübertragungseinrichtung (14) verbunden ist, so dass der bewegliche Kontakt (12) mit dem feststehenden Kontakt (11) während des Schließungs- bzw. Öffnungsvorganges des Niederspannungsschütz (10) gekuppelt bzw. entkuppelt wird, wobe die piezoelektrische Antriebsanordnung (15) folgendes enthält:
eine Statoranordnung (16), welche mindestens eine piezoelektrische Anordnung (17) enthält, die wirkungsmäßig mit einem Statorgestell 18 verbunden ist; und
eine Rotoranordnung (19), welche wirkungsmäßig mit dem genannten Statorgestell (18) verbunden ist;
**dadurch gekennzeichnet, dass**
das Statorgestell (18) ein bewegliches haubenförmiges Element (21) aufweist, das mit einer Innenfläche (22) und einer Außenfläche (23) versehen ist; und
die piezoelektrische Anordnung (17) eine Mehrzahl von piezoelektrischen Elementen (24) enthält, welche mechanisch mit der Innenfläche (22) des beweglichen haubenförmigen Elementes (21) gekoppelt sind, wobei die piezoelektrischen Elemente (24) durch vorbestimmte Anregungssignale (25) angeregt werden, so dass eine elliptische Bewegung (26) der Punkte der Außenfläche (23) des haubenförmigen Elementes (21) vorgegeben wird.

2. Niederspannungsschütz (10) nach Anspruch 1, **dadurch gekennzeichnet, dass** die Rotoranordnung (19) einen Rotorstab (27) enthält, welcher mechanisch mit der Außenfläche (23) des beweglichen haubenförmigen Elementes (21) gekoppelt ist, so dass er eine Linearbewegung (28) erfährt.

3. Niederspannungsschütz (10) nach Anspruch 1 oder 2, **dadurch gekennzeichnet, dass** das Statorgestell (18) ein Flanschteil (41) enthält, dass mit einer Basiswand (43) und einer aufragenden Wand (42) versehen ist, wobei die aufragende Wand (42) im Wesentlichen vertikal von der genannten Basiswand (43) aufragt.

4. Niederspannungsschütz (10) nach Anspruch 3, **dadurch gekennzeichnet, dass** die piezoelektrische Anordnung (17) eine Mehrzahl von piezoelektrischen Elementen (45) enthält, welche mechanisch mit der genannten Basiswand (43) gekoppelt sind, wobei die piezoelektrischen Elemente (45) durch vorbestimmte Anregungssignale angeregt werden, so dass sie eine elliptische Bewegung (46) der aufragenden Wand (42) vorgeben.

5. Niederspannungsschütz (10) nach Anspruch 4, **dadurch gekennzeichnet, dass** die Rotoranordnung (19) eine Rotorscheibe (51) enthält, welche mechanisch mit der aufragenden Wand (42) gekoppelt ist, so dass sie einer Drehbewegung unterzogen wird.

6. Niederspannungsschütz (10) nach Anspruch 4, **dadurch gekennzeichnet, dass** die Bewegungsübertragungseinrichtung (14) ein Bewegungsübertragungselement (29) enthält, welches wirkungsmäßig mit der Rotorwelle (27) und dem beweglichen Kontakt (12) verbunden ist, so dasss es eine Bewegung auf den beweglichen Kontakt (12) überträgt.

7. Niederspannungsschütz (10) nach Anspruch 5, **dadurch gekennzeichnet, dass** die Bewegungsübertragungseinrichtung (14) folgendes enthält:
eine Welle (52), welche mechanisch mit der Rotorscheibe (51) verbunden ist;
einen Nocken (53), welcher mechanisch fest auf die genannte Welle (52) gesetzt ist, wobei der Nocken (53) mechanisch mit dem beweglichen Kontakt (12) so zusammenwirkt, dass er eine Bewegung auf den beweglichen Kontakt (12) überträgt.

8. Niederspannungsschütz (10) nach Anspruch 7, **dadurch gekennzeichnet, dass** er Federmittel (54) enthält, welche mechanisch zwischen den beweglichen Kontakt (12) und den feststehenden Kontakt (11) gesetzt sind, wobei die Federmittel (54) so angeordnet sind, dass sie während des Schließvorganges des Niederspannungsschütz (10) zusammengedrückt werden.

9. Niederspannungschütz (10) nach Anspruch 5, **dadurch gekennzeichnet, dass** die Bewegungsübertragungseinrichtung (14) folgendes enthält:
eine Welle (52), welche mechanisch mit der Rotorscheibe (51) verbunden ist;
ein Ritzel (56), welches mechanisch feststehend auf die genannte Welle (52) gesetzt ist, wobei das Ritzel (56) mechansich mit einer Zahnstange (57) zusammenwirkt, welche mit dem beweglichen Kontakt (12) in Verbindung steht, so dass eine Bewegung auf den beweglichen Kontakt (12) übertragbar ist.

10. Niederspannungsschütz (10) nach einem oder mehreren der vorausgehenden Ansprüche, **dadurch gekennzeichnet, dass** er einen oder mehrere elektrische Pole aufweist, von denen jeder mindestens einen feststehenden Kontakt (11) und einen beweglichen Kontakt (12) aufweist.

11. Niederspannungsschütz (10) nach Anspruch (10), **dadurch gekennzeichnet, dass** es sich um einen dreipoligen Schütz handelt.

12. Niederspannungsschütz (10) nach Anspruch (10), **dadurch** gekenntzeichnet, dass es sich um einen vierpoligen Schütz handelt.

## Revendications

1. Contacteur basse tension (10) destiné à des applications de distribution d'énergie basse tension comprenant au moins un contact fixe (11) et un contact mobile (12), ledit contact mobile étant couplé audit / découplé dudit contact fixe (11) au cours de l'opération de fermeture / d'ouverture dudit contacteur basse tension (10), comprenant des moyens de génération de déplacement (13), connectés de manière fonctionnelle audit contact mobile (12) à l'aide de moyens de transmission de déplacement (14), lesdits moyens de génération de déplacement (13) comprenant au moins un ensemble de moteur piézoélectrique (15), connecté de manière fonctionnelle auxdits moyens de transmission de déplacement (14), afin de coupler /découpler ledit contact mobile (12) et ledit contact fixe (11) au cours de l'opération de fermeture / d'ouverture dudit contacteur basse tension (10), ledit ensemble de moteur piézoélectrique (15), comprenant :
- un agencement de stator (16) comprenant au moins un ensemble piézoélectrique (17) connecté de manière fonctionnelle à une carcasse de stator (18) ; et
- un agencement de rotor (19), connecté de manière fonctionnelle à ladite carcasse de stator (18),
**caractérisé par le fait que** :
- ladite carcasse de stator (18) comprend un élément mobile en forme de chapeau (21) qui présente une surface intérieure (22) et une surface extérieure (23) ; et
- ledit ensemble piézoélectrique (17) comprend une pluralité d'éléments piézoélectriques (24) couplés de manière mécanique à la surface intérieure (22) dudit élément mobile en forme de chapeau (21), lesdits éléments piézoélectriques (24) étant excités par des signaux d'excitation prédéfinis (25), afin de déterminer un déplacement elliptique (26) des points de la surface extérieure (23) dudit élément en forme de chapeau (21).

2. Contacteur basse tension (10), selon la revendication 1, **caractérisé en ce que** ledit agencement de rotor (19) comprend une tige de rotor (27), ladite tige de rotor (27) étant couplée de manière mécanique à la surface extérieure (23) dudit élément mobile en forme de chapeau (21), afin d'être soumis à un déplacement (28) du type linéaire.

3. Contacteur basse tension (10), selon l'une quelconque des revendications 1 ou 2, **caractérisé en ce que** ladite carcasse de stator (18) comprend un élément de bride (41) prévu avec une paroi de base (43) et une paroi qui fait saillie (42), ladite paroi qui fait saillie (42) faisant saillie d'une manière sensiblement verticale de ladite paroi de base (43).

4. Contacteur basse tension (10), selon la revendication 3, **caractérisé** dans ce que ledit ensemble piézoélectrique (17) comprend une pluralité d'éléments piézoélectriques (45) couplés de manière mécanique à ladite paroi de base (43), lesdits éléments piézoélectriques (45) étant excités par des signaux d'excitation prédéfinis, afin de déterminer un déplacement elliptique (46) de ladite paroi qui fait saillie (42).

5. Contacteur basse tension (10), selon la revendication 4, **caractérisé en ce que** ledit agencement de rotor (19) comprend un disque de rotor (51), ledit disque de rotor (51) étant couplé de manière mécanique à ladite paroi qui fait saillie (42), afin d'être soumis à un déplacement du type en rotation.

6. Contacteur basse tension (10), selon la revendication 4, **caractérisé en ce que** lesdits moyens de transmission de déplacement (14) comprennent un élément de transmission de déplacement (29) connecté de manière fonctionnelle à ladite tige de rotor (27) et audit contact mobile (12), afin de transmettre un déplacement audit contact mobile (12).

7. Contacteur basse tension (10), selon la revendication 5, **caractérisé en ce que** lesdits moyens de transmission de déplacement (14) comprennent :
- un arbre (52) connecté de manière mécanique audit disque de rotor (51) ;
- une came (53) connectée de manière mécanique audit arbre (52), ladite came (53) coopérant de manière mécanique avec ledit contact mobile (12), afin de transmettre un déplacement audit contact mobile (12).

8. Contacteur basse tension (10), selon la revendication 7, **caractérisé en ce qu'**il comprend des moyens formant ressort (54) connectés de manière mécanique entre ledit contact mobile (12) et ledit contact fixe (11), les moyens formant ressort (54) étant positionnés afin d'être comprimés au cours de l'opération de fermeture dudit contacteur basse tension (10).

9. Contacteur basse tension (10), selon la revendication 5, **caractérisé en ce que** lesdits moyens de transmission de déplacement (14) comprennent :
- un arbre (52) connecté de manière mécanique audit disque de rotor (51) ;
- un pignon (56) fixé de manière mécanique audit arbre (52), ledit pignon (56) coopérant de manière mécanique avec une crémaillère (57), ladite crémaillère (57) étant connectée audit contact mobile (12), afin de transmettre un déplacement audit contact mobile (12).

10. Contacteur basse tension (10), selon une ou plusieurs des revendications précédentes, **caractérisé en ce qu'**il comprend un ou plusieurs pôles électriques, chacun desdits pôles électriques comprenant au moins un contact fixe (11) et un contact mobile (12).

11. Contacteur basse tension (10), selon la revendication 10, **caractérisé en ce qu'**il est du type tripolaire.

12. Contacteur basse tension (10), selon la revendication 10, **caractérisé en ce qu'**il est du type quadripolaire.
